# EUROPÄISCHE PATENTSCHRIFT

(11) **EP 2 093 861 B1**
(45) Veröffentlichungstag und Bekanntmachung des Hinweises auf die Patenterteilung: **15.09.2010**
(21) Anmeldenummer: 08003290.7
(22) Anmeldetag: 22.02.2008
(51) Int. Cl.: H02K 1/27

(54) **Rotor einer elektronischen Maschine mit profilangepasster Läuferendscheibe**
Rotor for an electronic machine with profile-adjusted rotor end plate
Rotor d'une machine électronique dotée d'un disque terminal de rotor adapté au profilé

(43) Veröffentlichungstag der Anmeldung: 26.08.2009
(73) Patentinhaber: SIEMENS AKTIENGESELLSCHAFT, 80333 München (DE)
(72) Erfinder: Eckert, Rainer, 97616 Bad Neustadt/Herschfeld (DE); Fuss, Frank, 97657 Waldberg (DE); Giese, Klaus, 9830 Suhl-Wichtshausen (DE); Seufert, Jürgen, 97616 Bad Neustadt (DE); Vollmer, Rolf, 36129 Gersfeld (DE)

(56) Entgegenhaltungen:
- DE-A1- 10 053 694
- JP-A- 9 200 984
- JP-A- 58 195 460
- JP-A- 2005 045 923

## Beschreibung

Die vorliegende Erfindung betrifft einen Rotor einer elektrischen Maschine,
- wobei der Rotor eine Rotorwelle aufweist, die um eine Wellenachse rotierbar ist,
- wobei auf der Rotorwelle ein Rotorblechpaket angeordnet ist,
- wobei auf dem Rotorblechpaket radial außen Läufermagnete angeordnet sind, die tangential voneinander beabstandet sind,
- wobei der Rotor mindestens eine Läuferendscheibe aufweist, die auf der Rotorwelle angeordnet ist und axial an das Rotorblechpaket angrenzt,
- wobei der Rotor eine Bandage aufweist, die mindestens einschichtig auf die Läuferendscheibe und die Läufermagnete gewickelt ist.

Derartige Rotoren sind allgemein bekannt.

Die Läufermagnete sind bei derartigen Rotoren oftmals auf das Rotorblechpaket nur aufgeklebt. In einer Vielzahl von Anwendungsfällen ist die Klebekraft unzureichend, um die Läufermagnete auf dem Läuferblechpaket im Betrieb stabil zu halten. In diesen Fällen ist es erforderlich, die obenstehend erwähnte Bandage vorzusehen, damit die Läufermagnete auf dem Rotorblechpaket sicher gehalten werden. Das Bandagieren wird hierbei auf der obenstehend erwähnten Läuferendscheibe begonnen. Auf die Läuferendscheibe werden hierbei zunächst mehrere Windungen aufgelegt, damit die Bandage entsprechend zugbeaufschlagt werden kann. Sodann wird die Bandage über die Läufermagnete geführt und schließlich das Ende der Bandage wieder auf eine Läuferendscheibe gewickelt. Die Läuferendscheibe, auf welche das Bandagenende gewickelt wird, kann hierbei dieselbe Läuferendscheibe sein, auf die auch der Bandagenanfang gewickelt ist. Alternativ kann es sich um eine andere Läuferendscheibe handeln.

Im Stand der Technik ist die Läuferendscheibe kreisrund. Ein Bandagenprofil hingegen ist oftmals unrund, insbesondere im Wesentlichen polygonförmig. Mit dem Begriff "Bandagenprofil" ist herbei das Profil gemeint, welches diejenige Schicht der Bandage bildet, welche radial unmittelbar an die Läufermagnete angrenzt.

Der Profilunterschied führt sowohl zu fertigungstechnischen Problemen als auch zu Betriebsproblemen. So kann sich beispielsweise die Bandage beim Wickeln am Übergang von der Läuferendscheibe zu den Läufermagneten aufwerfen. Dadurch kann es geschehen, dass der Läufer im Betrieb in der Ständerbohrung der elektrischen Maschine schleift. Weiterhin können die Magnete im Übergangsbereich von der Läuferendscheibe zum Rotorblechpaket radial überstehen, so dass die mechanische Schutzfunktion der Bandage nicht in vollem Umfang gewährleistet ist.

Aus der JP 09 200984 A ist ein Rotor einer elektrischen Maschine bekannt, die einen zylindrischen Magneten aufweist. Der zylindrische Magnet wird durch Endplatten 4 und eine Bandage gehalten. Die Endplatten weisen Schlitze auf, an denen die Bandage fixiert ist.

Aus der DE 100 53 694 A1 ist ein Drehstromsynchronmotor mit einem um eine Rotationsachse rotierenden und mindestens einem Permanentmagneten tragenden Rotor bekannt, wobei die Permanentmagnete am Rotor durch ein am stirnseitigen Ende des Rotors angeordnetes und sich im Wesentlichen in einer Fläche erstreckendes Klemmelement aufweisen, dass mindestens eine Klemmkralle aufweist, die in fixierender Anlage an den Permanentmagneten ist.

Die Aufgabe der vorliegenden Erfindung besteht darin, einen Rotor der obenstehend beschriebenen Art derart weiter zu entwickeln, dass die Probleme des Standes der Technik vermieden werden.

Die Aufgabe wird durch einen Rotor mit den Merkmalen des Anspruchs 1 gelöst. Bevorzugte Ausgestaltungen des erfindungsgemäßen Rotors sind den abhängigen Ansprüchen 2 bis 20 zu entnehmen.

Erfindungsgemäß ist bei einem Rotor der obenstehend beschriebenen Art vorgesehen, dass die Läuferendscheibe quer zur Wellenachse gesehen ein nicht kreisförmiges Läuferendscheibenprofil aufweist, das im geometrischen Sinne ähnlich zu dem obenstehend definierten Bandagenprofil ist.

Durch diese Maßnahme kann erreicht werden, dass die Bandage beim Übergang von der Läuferendscheibe zu den Läufermagneten bereits das gleiche Profil aufweist, so dass ein höhengleicher Übergang von der Läuferendscheibe zu den Läufermagneten möglich ist.

Die erfindungsgemäße Ausgestaltung ist besonders wirksam bei einem Rotor, bei welchem die Läufermagnete als randabgesenkte Magnete ausgebildet sind.

Das Läuferendscheibenprofil ist in der Regel kleiner als das Bandagenprofil. Denn dadurch ist ein problemloses Anwickeln der Bandage nebst einem höhengleichen Übergang von der Läuferendscheibe zu den Läufermagneten möglich. Vorzugsweise ist hierbei ein radialer Abstand des Läuferendscheibenprofils vom Bandagenprofil ein ganzzahliges Vielfaches einer Bandagendicke. Unter dem Begriff "Bandagendicke" ist hierbei die Dicke einer einzelnen Schicht der Bandage in Radialrichtung zu verstehen.

Die Bandage weist in Axialrichtung gesehen eine Bandagenbreite auf. Unter dem Begriff "Bandagenbreite" ist hierbei die Breite einer einzelnen Windung der Bandage in Axialrichtung zu verstehen. Eine Läuferendscheibenbreite der Läuferendscheibe ist in Axialrichtung gesehen vorzugsweise mindestens so groß wie die Bandagenbreite. Dadurch ist ein problemloses Wickeln der Bandage auf die Läuferendscheibe möglich, ohne dass die Gefahr eines Abrutschens der Bandage besteht.

In der Regel weist die Läuferendscheibe ein quer zur Wellenachse verlaufendes Zentralelement und ein radial außen an das Zentralelement angrenzendes Umlaufelement auf. Das Umlaufelement steht hierbei vorzugsweise zumindest auf der von dem Rotorblechpaket abgewandten Seite der Läuferendscheibe axial über das Zentralelement über. Durch diese Ausgestaltung ist die Läuferendscheibe mechanisch stabil sowie konstruktiv und herstellungstechnisch einfach gestaltet.

In einer bevorzugten Ausgestaltung der Läuferendscheibe weist das Zentralelement in radialem Abstand von der Wellenachse Ausnehmungen zur Aufnahme von Auswuchtmassen auf. Durch diese Maßnahme ist ein einfaches Auswuchten des Rotors möglich. Die Ausnehmungen können hierbei insbesondere radial außen, also am Übergang von dem Zentralelement zum Umlaufelement, angeordnet sein.

In der Regel umfasst das Läuferendscheibenprofil in Tangentialrichtung gesehen eine regelmäßige Anordnung von Sehnen, also von geraden Abschnitten. Die Sehnen können unmittelbar aneinander angrenzen. Alternativ kann sich zwischen den Sehnen jeweils ein bogenförmiger Abschnitt befinden.

Vorzugsweise ist die Läuferendscheibe auf der Rotorwelle relativ zum Rotorblechpaket auch ohne die Bandage verdrehsicher angeordnet. Dadurch kann die Läuferendscheibe vor dem Aufbringen (= Wickeln) der Bandage auf einfache Weise in einer definierten Drehposition relativ zum Rotorblechpaket gehalten werden.

In einfach gelagerten Fällen kann es zur verdrehsicheren Anordnung der Läuferendscheibe auf der Rotorwelle ausreichen, dass die Läuferendscheibe auf die Rotorwelle aufgeschrumpft oder aufgepresst ist. In der Regel wird jedoch - alternativ oder zusätzlich zum Aufschrumpfen bzw. Aufpressen - die Läuferendscheibe mit dem Rotorblechpaket über radial exzentrisch angeordnete, axial verlaufende Fixierungselemente verdrehsicher fixiert sein.

Die Fixierungselemente können beispielsweise als an der Läuferendscheibe an deren dem Rotorblechpaket zugewandten Seite angeordnete Laschen ausgebildet sein, die in korrespondierende Ausnehmungen des Rotorblechpaketes eingreifen. Alternativ können die Fixierungselemente als Axialbolzen ausgebildet sein, die durch miteinander korrespondierende Ausnehmungen des Rotorblechpakets und der Läuferendscheibe geführt sind. Die Läuferendscheibe besteht vorzugsweise aus einem nicht magnetischen Material. Bei dem nicht magnetischen Material kann es sich alternativ um ein elektrisch isolierendes Material (beispielsweise Kunststoff oder Keramik) oder um ein elektrisch leitendes Material (insbesondere ein Metall) handeln. Insbesondere in dem Fall, dass die Läuferendscheibe aus einem elektrisch leitenden Material besteht, kann die Läuferendscheibe als Stanz-Tiefziehteil ausgebildet sein.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: einen Rotor einer elektrischen Maschine in Queransicht,
- FIG 2: einen Schnitt durch den Rotor von FIG 1 längs einer Linie II-II in FIG 1,
- FIG 3: einen Schnitt durch eine Läuferendscheibe längs einer Linie III-III in FIG 1,
- FIG 4: eine perspektivische Darstellung einer Läufer- endscheibe,
- FIG 5: einen Schnitt durch den Rotor von FIG 1 längs einer Linie V-V in FIG 1,
- FIG 6: ein Läuferendscheibenprofil,
- FIG 7: einen Ausschnitt des Rotors von FIG 1 in aus- einandergezogener Darstellung und
- FIG 8: eine zu FIG 7 alternative Ausgestaltung.

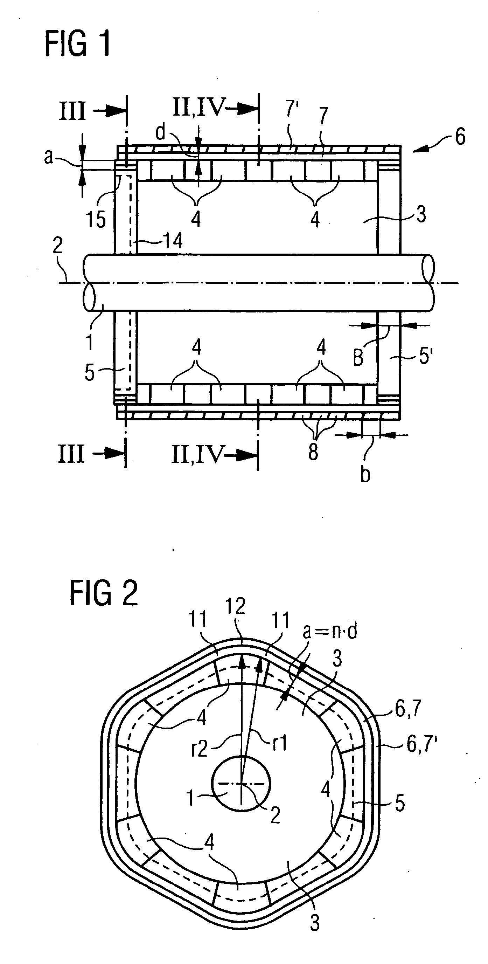

Gemäß FIG 1 weist ein Rotor einer elektrischen Maschine eine Rotorwelle 1 auf. Die Rotorwelle 1 ist um eine Wellenachse 2 rotierbar. Auf der Rotorwelle 1 ist ein Rotorblechpaket 3 angeordnet. Auf dem Rotorblechpaket 3 sind - siehe ergänzend FIG 2 - radial außen Läufermagnete 4 angeordnet. Die Läufermagnete 4 sind tangential voneinander beabstandet.

Die Begriffe "radial" und "tangential" sind - ebenso wie der nachfolgend ebenfalls verwendete Begriff "axial" - auf die Wellenachse 2 bezogen. "Axial" bedeutet hierbei eine Richtung parallel zur Wellenachse 2. "Radial" bedeutet eine Richtung orthogonal zur Wellenachse 2 auf die Wellenachse 2 zu bzw. von der Wellenachse 2 weg. "Tangential" definiert eine Richtung orthogonal zur Wellenachse 2 und orthogonal zur Radialrichtung, also um die Wellenachse 2 herum.

Der Rotor weist weiterhin mindestens eine Läuferendscheibe 5, 5' auf. Gemäß FIG 1 sind sogar zwei Läuferendscheiben 5, 5' vorhanden. Prinzipiell ist es jedoch ausreichend, wenn nur eine einzige Läuferendscheibe 5, 5', beispielsweise die Läuferendscheibe 5, vorhanden ist. Die Läuferendscheiben 5, 5' sind auf der Rotorwelle 1 angeordnet und grenzen axial an das Rotorblechpaket 3 an.

Schließlich weist der Rotor eine Bandage 6 auf. Die Bandage 6 ist mindestens einschichtig auf die Läuferendscheiben 5, 5' und die Läufermagnete 4 gewickelt. Mittels der Bandage 6 sind die Läufermagnete 4 auf dem Rotorblechpaket 3 radial und tangential fixiert.

Die Bandage 6 definiert dadurch, dass sie auf die Läufermagnete 4 gewickelt ist, ein Bandagenprofil. Das Bandagenprofil wird hierbei in dem Fall, dass die Bandage 6 im Bereich der Läufermagnete 4 mehrere Schichten 7, 7' aufweist, durch diejenige Schicht 7 definiert, welche radial unmittelbar an die Läufermagnete 4 angrenzt.

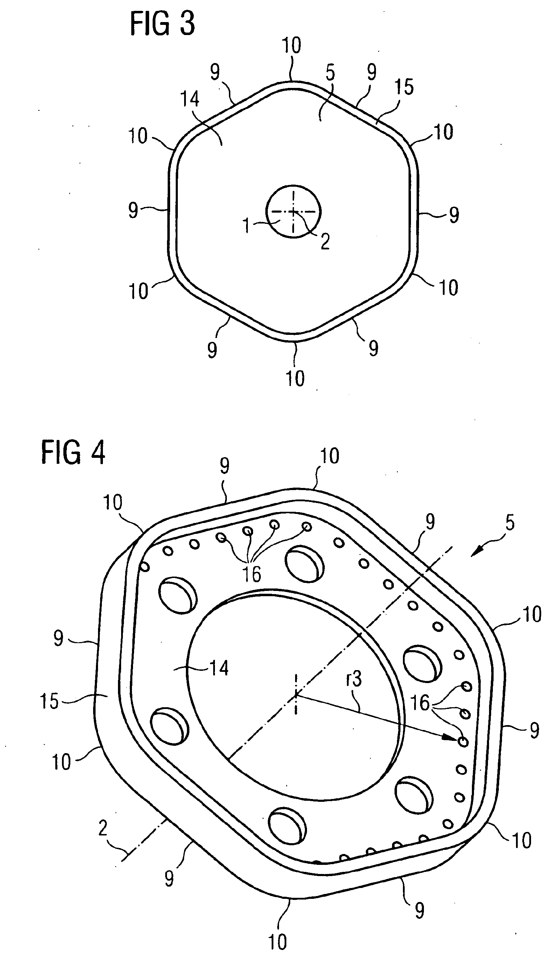

Die Läuferendscheibe 5 (analoges gilt gegebenenfalls für die Läuferendscheibe 5') weist gemäß den FIG 3 und 4 quer zur Wellenachse 2 gesehen ein Läuferendscheibenprofil auf, das nicht kreisförmig ist. Insbesondere ist das Läuferendscheibenprofil gemäß den FIG 2 bis 4 im geometrischen Sinne ähnlich zu dem obenstehend definierten Bandagenprofil. In der Regel ist das Läuferendscheibenprofil (siehe die gestrichelte Kontur in FIG 2) hierbei kleiner als das Bandagenprofil.

Die Bandage 6 weist in Radialrichtung gesehen eine Bandagendicke d auf. Die Bandagendicke d ist hierbei nicht auf die Gesamtdicke der Bandage 6 bezogen, sondern auf die Dicke einer einzelnen Schicht 7, 7' der Bandage 6. Das Läuferendscheibenprofil weist gemäß den FIG 1 und 2 einen radialen Abstand a vom Bandagenprofil auf. Der radiale Abstand ist vorzugsweise ein ganzzahliges Vielfaches der Bandagendicke d.

Die Bandage 6 weist weiterhin gemäß FIG 1 in Axialrichtung gesehen eine Bandagenbreite b auf. Der Begriff "Bandagenbreite" ist hierbei nicht auf die Gesamtbreite der Bandage 6 bezogen, sondern auf die Breite einer einzelnen Windung 8 der Bandage 6. Der besseren Übersichtlichkeit wegen sind die Windungen 8 hierbei in FIG 1 nur teilweise dargestellt. Die Läuferendscheibe 5 (analoges gilt gegebenenfalls für die Läuferendscheibe 5') weist in Axialrichtung gesehen eine Läuferendscheibenbreite B auf. Vorzugsweise ist die Läuferendscheibenbreite B der Läuferendscheibe 5 mindestens so groß wie die Bandagenbreite b. Vorzugsweise ist die Läuferendscheibenbreite B sogar größer als die Bandagenbreite b.

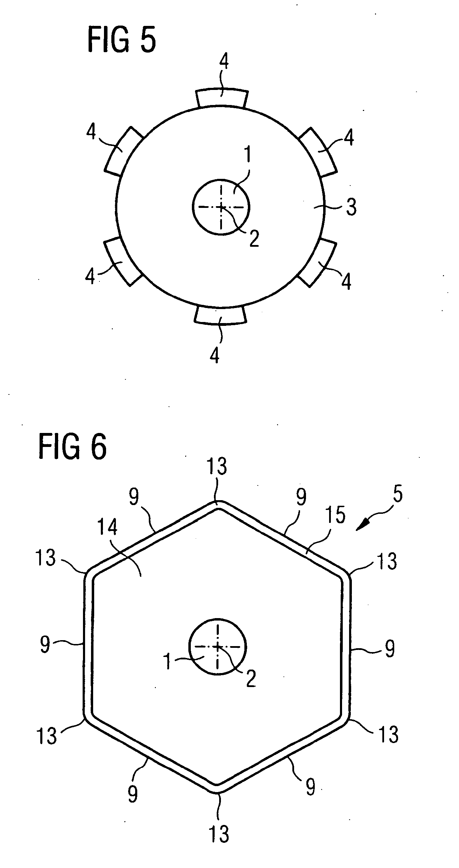

Gemäß den FIG 3 und 4 umfasst das Läuferendscheibenprofil in Tangentialrichtung gesehen eine regelmäßige Anordnung von Sehnen 9. Zwischen den Sehnen 9 befindet sich hierbei jeweils ein bogenförmiger Abschnitt 10. Eine derartige Ausgestaltung ist insbesondere in dem Falle der Ausgestaltung gemäß FIG 2 sinnvoll, in welcher die Läufermagnete 4 als randabgesenkte Magnete ausgebildet sind. Der Begriff "randabgesenkt" bedeutet hierbei, dass die Läufermagnete 4 radial außen in Tangentialrichtung derart gekrümmt sind, dass ein radialer Abstand r1 der Läufermagnete 4 in tangentialen Randbereichen 11 der Läufermagnete 4 kleiner ist als ein radialer Abstand r2 in tangentialen Mittelbereichen 12 der Läufermagnete 4. Prinzipiell ist die erfindungsgemäße Ausgestaltung des Rotors (insbesondere der Läuferendscheiben 5, 5') jedoch ebenfalls möglich, wenn die Läufermagnete 4 entsprechend FIG 5 nicht als randabgesenkte Magnete ausgebildet sind.

FIG 6 zeigt eine modifizierte Ausgestaltung der Läuferendscheibe 5 (bzw. 5'). Gemäß FIG 6 grenzen die Sehnen 9 unmittelbar aneinander an. In diesem Fall ist das Läuferendscheibenprofil rein polygonal. Lediglich in Übergangsbereichen 13 der Sehnen 9 kann in diesem Fall ein kleiner gerundeter Abschnitt vorhanden sein.

Wie besonders deutlich aus FIG 4 ersichtlich ist, weist die Läuferendscheibe 5 (analoges gilt gegebenenfalls für die Läuferendscheibe 5') ein Zentralelement 14 und ein Umlaufelement 15 auf. Das Zentralelement 14 verläuft quer zur Wellenachse 2, erstreckt sich also radial. Das Umlaufelement 15 grenzt radial außen an das Zentralelement 14 an. Es erstreckt sich tangential um das Zentralelement 14 herum. Es weist weiterhin eine Axialerstreckung auf, welche mit der Läuferendscheibenbreite B korrespondiert. Das Umlaufelement 15 steht gemäß FIG 4 zumindest auf der Seite der Läuferendscheibe 5 axial über das Zentralelement 14 über, die von dem Rotorblechpaket 3 abgewandt ist.

Gemäß FIG 4 weist das Zentralelement 14 weiterhin in einem radialen Abstand r3 von der Wellenachse 2 Ausnehmungen 16 auf. Die Ausnehmungen 16 können hierbei insbesondere radial außen angeordnet sein, also am Übergang vom Zentralelement 14 zum Umlaufelement 15. Die Ausnehmungen 16 können beispielsweise als kleine, topfartige Vertiefungen ausgebildet sein. Sie dienen der Aufnahme und Fixierung von Auswuchtmassen, beispielsweise von Wuchtkitt.

Die Läuferendscheibe 5 (analoges gilt gegebenenfalls für die Läuferendscheibe 5') ist auf der Rotorwelle 1 relativ zum Rotorblechpaket 3 verdrehsicher angeordnet. Die verdrehsichere Anordnung ist hierbei auch ohne die Bandage 6 gegeben, wenn also die Bandage 6 nicht auf die Läuferendscheibe 5 und die Läufermagnete 4 gewickelt ist.

Zur Realisierung der verdrehsicheren Anordnung sind verschiedene Möglichkeiten gegeben. Im einfachsten Fall ist die Läuferendscheibe 5 (analoges gilt gegebenenfalls für die Läuferendscheibe 5') auf die Rotorwelle 1 aufgeschrumpft oder aufgepresst. Dies kann im Einzelfall ausreichen. Im Regelfall ist es jedoch erforderlich, die Läuferendscheibe 5 mit dem Rotorblechpaket 3 über radial exzentrisch angeordnete, axial verlaufende Fixierungselemente 17, 19 verdrehsicher zu fixieren. Die verdrehsichere Fixierung mittels der Fixierelemente 17, 19 kann hierbei alternativ oder zusätzlich zum Aufschrumpfen bzw. Aufpressen der Läuferendscheibe 5 auf die Rotorwelle 1 gegeben sein.

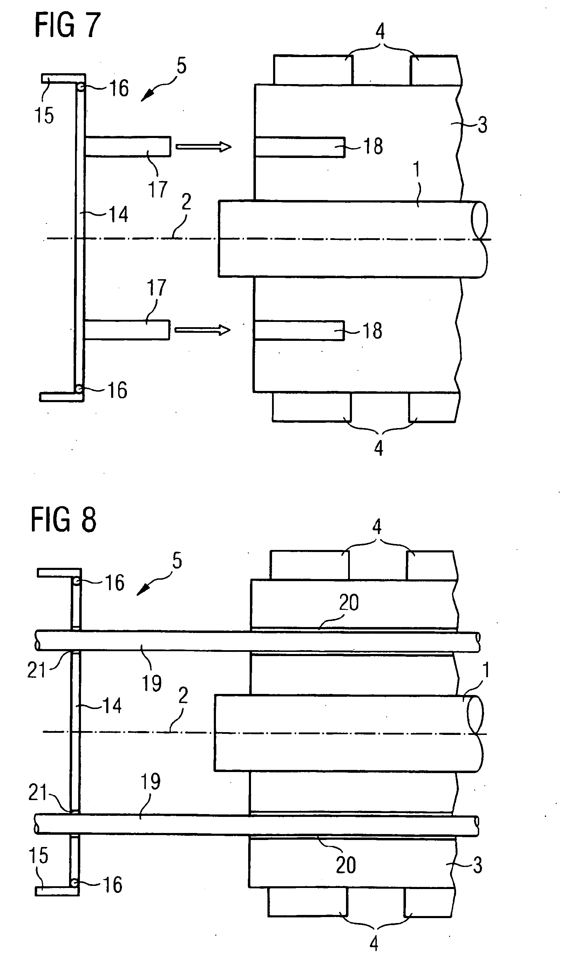

Gemäß FIG 7 sind die Fixierungselemente 17 als Laschen 17 ausgebildet, die an der Läuferendscheibe 5 angeordnet sind. Die Anordnung der Laschen 17 ist hierbei an der Seite der Läuferendscheibe 5, welche dem Rotorblechpaket 3 zugewandt ist. Die Laschen 17 greifen in der Ausgestaltung gemäß FIG 7 in korrespondierende Ausnehmungen 18 des Rotorblechpakets 3 ein.

Alternativ ist es möglich, dass die Fixierungselemente 19 als Axialbolzen 19 ausgebildet sind. Die Axialbolzen 19 sind in diesem Fall durch miteinander korrespondierende Ausnehmungen 20, 21 des Rotorblechpakets 3 und der Läuferendscheibe 5 geführt.

Die Läuferendscheibe 5 (analoges gilt gegebenenfalls für die Läuferendscheibe 5') besteht in der Regel aus einem nicht magnetischen Material. In einer bevorzugten Ausgestaltung besteht die Läuferendscheibe 5, 5' hierbei aus einem elektrisch isolierenden Material, beispielsweise aus einer Keramik oder aus Kunststoff. Im Falle der Verwendung von Kunststoff ist die Läuferendscheibe 5 (bzw. 5') hierbei vorzugsweise als Spritzgießteil ausgebildet. Alternativ kann die Läuferendscheibe 5 (bzw. 5') aus einem elektrisch leitenden Material bestehen, beispielsweise aus einem Metall, insbesondere aus Messing. Insbesondere im Falle einer metallischen Läuferendscheibe 5 (bzw. 5') ist die Läuferendscheibe 5, 5' hierbei vorzugsweise als Stanz-Tiefziehteil ausgebildet.

Der erfindungsgemäße Rotor weist viele Vorteile auf. Insbesondere ergeben sich keine Probleme mehr beim Übergang der Bandage 6 von der Läuferendscheibe 5 (bzw. 5') auf die Läufermagnete 4. Weder treten Verwerfungen auf noch treten offene Stellen auf, d.h. Stellen, an denen die Läufermagnete 4 nicht bandagiert sind.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Rotor einer elektrischen Maschine,
- wobei der Rotor eine Rotorwelle (1) aufweist, die um eine Wellenachse (2) rotierbar ist,
- wobei auf der Rotorwelle (1) ein Rotorblechpaket (3) angeordnet ist,
- wobei auf dem Rotorblechpaket (3) radial außen Läufermagnete (4) angeordnet sind, die tangential voneinander beabstandet sind,
- wobei der Rotor mindestens eine Läuferendscheibe (5,5') aufweist, die auf der Rotorwelle (1) angeordnet ist und axial an das Rotorblechpaket (3) angrenzt,
- wobei der Rotor eine Bandage (6) aufweist, die mindestens einschichtig auf die Läuferendscheibe (5,5') und die Läufermagnete (4) gewickelt ist,
- wobei die Läuferendscheibe (5,5') quer zur Wellenachse (2) gesehen ein nicht kreisförmiges Läuferendscheibenprofil aufweist, das im geometrischen Sinne ähnlich zu einem durch die an die Läufermagnete (4) radial unmittelbar angrenzende Schicht (7) der Bandage (6) definierten Bandagenprofil ist.

2. Rotor nach Anspruch 1, **dadurch gekennzeichnet, dass** die Läufermagnete (4) als randabgesenkte Magnete ausgebildet sind.

3. Rotor nach Anspruch 1 oder 2, **dadurch gekennzeichnet, dass** das Läuferendscheibenprofil kleiner als das Bandagenprofil ist.

4. Rotor nach Anspruch 3, **dadurch gekennzeichnet, dass** die Bandage (6) in Radialrichtung gesehen eine Bandagendicke (d) aufweist und dass ein radialer Abstand (a) des Läuferendscheibenprofils vom Bandagenprofil ein ganzzahliges Vielfaches der Bandagendicke (d) ist.

5. Rotor nach einem der obigen Ansprüche, **dadurch gekennzeichnet, dass** in Axialrichtung gesehen die Bandage (6) eine Bandagenbreite (b) aufweist und eine Läuferendscheibenbreite (B) der Läuferendscheibe (5, 5') mindestens so groß wie die Bandagenbreite (b) ist.

6. Rotor nach einem der obigen Ansprüche, **dadurch gekennzeichnet, dass** die Läuferendscheibe (5, 5') ein quer zur Wellenachse verlaufendes Zentralelement (14) und ein radial außen an das Zentralelement (14) angrenzendes Umlaufelement (15) aufweist und dass das Umlaufelement (15) zumindest auf der von dem Rotorblechpaket (3) abgewandten Seite der Läuferendscheibe (5,5') axial über das Zentralelement (14) übersteht.

7. Rotor nach Anspruch 6, **dadurch gekennzeichnet, dass** das Zentralelement (14) in radialem Abstand (r3) von der Wellenachse (2) Ausnehmungen (16) zur Aufnahme von Auswuchtmassen aufweist.

8. Rotor nach Anspruch 7, **dadurch gekennzeichnet, dass** die Ausnehmungen (16) radial außen angeordnet sind.

9. Rotor nach einem der obigen Ansprüche, **dadurch gekennzeichnet, dass** das Läuferendscheibenprofil in Tangentialrichtung gesehen eine regelmäßige Anordnung von Sehnen (9) umfasst.

10. Rotor nach Anspruch 9, **dadurch gekennzeichnet, dass** die Sehnen (9) unmittelbar aneinander angrenzen.

11. Rotor nach Anspruch 9, **dadurch gekennzeichnet, dass** sich zwischen den Sehnen (9) jeweils ein bogenförmiger Abschnitt (10) befindet.

12. Rotor nach einem der obigen Ansprüche, **dadurch gekennzeichnet, dass** die Läuferendscheibe (5, 5') auf der Rotorwelle (1) relativ zum Rotorblechpaket (3) auch ohne die Bandage (6) verdrehsicher angeordnet ist.

13. Rotor nach Anspruch 12, **dadurch gekennzeichnet, dass** die Läuferendscheibe (5) auf die Rotorwelle (1) aufgeschrumpft oder aufgepresst ist.

14. Rotor nach Anspruch 12 oder 13, **dadurch gekennzeichnet, dass** die Läuferendscheibe (5) mit dem Rotorblechpaket (3) über radial exzentrisch angeordnete, axial verlaufende Fixierungselemente (17,19) verdrehsicher fixiert ist.

15. Rotor nach Anspruch 14, **dadurch gekennzeichnet, dass** die Fixierungselemente (17) als an der Läuferendscheibe (5,5') an deren dem Rotorblechpaket (3) zugewandten Seite angeordnete Laschen (17) ausgebildet sind, die in korrespondierende Ausnehmungen (18) des Rotorblechpakets (3) eingreifen.

16. Rotor nach Anspruch 14, **dadurch gekennzeichnet, dass** die Fixierungselemente (19) als Axialbolzen (19) ausgebildet sind, die durch miteinander korrespondierende Ausnehmungen (20,21) des Rotorblechpakets (3) und der Läuferendscheibe (5) geführt sind.

17. Rotor nach einem der obigen Ansprüche, **dadurch gekennzeichnet, dass** die Läuferendscheibe (5, 5') aus einem nicht magnetischen Material besteht.

18. Rotor nach Anspruch 17, **dadurch gekennzeichnet, dass** die Läuferendscheibe (5,5') aus einem elektrisch isolierenden Material besteht.

19. Rotor nach Anspruch 17, **dadurch gekennzeichnet, dass** die Läuferendscheibe (5,5') aus einem elektrisch leitenden Material besteht.

20. Rotor nach Anspruch 19, **dadurch gekennzeichnet, dass** die Läuferendscheibe (5,5') als Stanz-Tiefziehteil ausgebildet ist.

## Claims

1. Rotor of an electric machine,
- the rotor having a rotor shaft (1), which can be rotated about a shaft axis (2),
- a rotor core assembly (3) being disposed on the rotor shaft (1),
- rotor magnets (4) being disposed in a radially outward manner on the rotor core assembly (3), at a tangential distance from one another,
- the rotor having at least one rotor end disk (5, 5'), which is disposed on the rotor shaft (1) and is axially adjacent to the rotor core assembly (3),
- the rotor having a bandage (6), which is wound onto the rotor end disk (5, 5') and the rotor magnets (4) in at least one layer,
- the rotor end disk (5, 5') having a non-circular rotor end disk profile when viewed perpendicular to the shaft axis (2), said profile being similar in a geometric sense to a bandage profile defined by the layer (7) of the bandage (6) that is radially directly adjacent to the rotor magnets (4).

2. Rotor according to claim 1, **characterised in that** the rotor magnets (4) are configured as peripherally lowered magnets.

3. Rotor according to claim 1 or 2, **characterised in that** the rotor end disk profile is smaller than the bandage profile.

4. Rotor according to claim 3, **characterised in that** when viewed in the radial direction the bandage (6) has a bandage thickness (d) and a radial distance (a) between the rotor end disk profile and the bandage profile is a whole-number multiple of the bandage thickness (d).

5. Rotor according to one of the preceding claims, **characterised in that** when viewed in the axial direction the bandage (6) has a bandage width (b) and a rotor end disk width (B) of the rotor end disk (5, 5') is at least as large as the bandage width (b).

6. Rotor according to one of the preceding claims, **characterised in that** the rotor end disk (5, 5') has a central element (14) running perpendicular to the shaft axis and a peripheral element (15) adjacent to the central element (14) in a radially outward manner and the peripheral element (15) projects axially beyond the central element (14) at least on the side of the rotor end disk (5, 5') facing away from the rotor core assembly (3).

7. Rotor according to claim 6, **characterised in that** the central element (14) has recesses (16) to accommodate balancing masses at a radial distance (r3) from the shaft axis (2).

8. Rotor according to claim 7, **characterised in that** the recesses (16) are disposed in a radially outward manner.

9. Rotor according to one of the preceding claims, **characterised in that** when viewed in the tangential direction the rotor end disk profile comprises a regular arrangement of chords (9).

10. Rotor according to claim 9, **characterised in that** the chords (9) are directly adjacent to one another.

11. Rotor according to claim 9, **characterised in that** an arched segment (10) is present between the chords (9) in each instance.

12. Rotor according to one of the preceding claims, **characterised in that** the rotor end disk (5, 5') is disposed on the rotor shaft (1) in such a manner that it cannot be turned relative to the rotor core assembly (3) even without the bandage (6).

13. Rotor according to claim 12, **characterised in that** the rotor end disk (5) is shrunk or pressed onto the rotor shaft (1).

14. Rotor according to claim 12 or 13, **characterised in that** the rotor end disk (5) is fixed to the rotor core assembly (3) in such a manner that it cannot be turned by way of fixing elements (17, 19) that run axially and are disposed in a radially eccentric manner.

15. Rotor according to claim 14, **characterised in that** the fixing elements (17) are configured as straps (17) disposed on the rotor end disk (5, 5') on its side facing the rotor core assembly (3), said straps (17) engaging in corresponding recesses (18) in the rotor core assembly (3).

16. Rotor according to claim 14, **characterised in that** the fixing elements (19) are configured as axial bolts (19), which are guided by corresponding recesses (20, 21) in the rotor core assembly (3) and the rotor end disk (5).

17. Rotor according to one of the preceding claims, **characterised in that** the rotor end disk (5, 5') is made of a non-magnetic material.

18. Rotor according to claim 17, **characterised in that** the rotor end disk (5, 5') is made of an electrically insulating material.

19. Rotor according to claim 17, **characterised in that** the rotor end disk (5, 5') is made of an electrically conducting material.

20. Rotor according to claim 19, **characterised in that** the rotor end disk (5, 5') is configured as a punched deep-drawn part.

## Revendications

1. Rotor d'une machine électrique,
- dans lequel le rotor a un arbre ( 1 ) qui peut tourner autour d'un axe ( 2 ) d'arbre,
- dans lequel un paquet ( 3 ) de tôles rotoriques est monté sur l'arbre ( 1 ) du rotor,
- dans lequel sur le paquet ( 3 ) de tôles rotoriques sont disposés radialement vers l'extérieur des aimants ( 4 ) d'induit qui tangentiellement sont à distance les uns des autres,
- dans lequel le rotor a au moins un flasque ( 5, 5' ) d'extrémité d'induit, qui est monté sur l'arbre ( 1 ) du rotor et qui est voisin axialement du paquet ( 3 ) de tôles rotoriques,
- dans lequel le rotor a un bandage ( 6 ) qui est enroulé au moins en une couche sur les flasques ( 5, 5' ) d'extrémité d'induit et sur les aimants ( 4 ) d'induit,
- dans lequel les flasques ( 5, 5' ) d'extrémité d'induit ont, considéré transversalement à l'axe ( 2 ) de l'arbre, un profil de flasque d'extrémité d'induit qui n'est pas circulaire, qui, au sens géométrique, est analogue à un profil de bandage défini par la couche ( 7 ) du bandage ( 6 ) voisine directement radialement des aimants ( 4 ) d'induit.

2. Rotor suivant la revendication 1, **caractérisé en ce que** les aimants ( 4 ) d'induit sont constitués sous la forme d'aimants abaissés sur le bord.

3. Rotor suivant la revendication 1 ou 2, **caractérisé en ce que** le profil du flasque d'extrémité d'induit est plus petit que le profil du bandage.

4. Rotor suivant la revendication 3, **caractérisé en ce que** le bandage ( 6 ) a, considéré dans la direction radiale, une épaisseur ( d ) et **en ce qu'**une distance ( a ) radiale du profil du flasque d'extrémité d'induit au profil du bandage est un multiple en nombre entier de l'épaisseur ( d ) du bandage.

5. Rotor suivant l'une des revendications précédentes, **caractérisé en ce que**, considéré dans la direction axiale, les bandages ( 6 ) ont une largeur ( b ) de bandage et une largeur ( B ) des flasques ( 5, 5' ) d'extrémité d'induit est au moins aussi grande que la largeur ( b ) de bandage.

6. Rotor suivant l'une des revendications précédentes, **caractérisé en ce que** le flasque ( 5, 5' ) d'extrémité d'induit a un élément ( 14 ) central s'étendant transversalement à l'axe de l'arbre et un élément ( 15 ) périphérique extérieur radialement voisin de l'élément ( 14 ) central et **en ce que** l'élément ( 15 ) périphérique dépasse axialement de l'élément ( 14 ) central au moins du côté du flasque ( 5, 5' ) d'extrémité d'induit éloigné du paquet ( 3 ) de tôles rotoriques.

7. Rotor suivant la revendication 6, **caractérisé en ce que** l'élément ( 14 ) central a, à distance ( r3 ) radiale de l'axe ( 2 ) de l'arbre, des évidements ( 16 ) de logement de masselottes de balourd.

8. Rotor suivant la revendication 7, **caractérisé en ce que** les évidements ( 16 ) sont disposés à l'extérieur radialement.

9. Rotor suivant l'une des revendications précédentes, **caractérisé en ce que** le profil du flasque d'extrémité d'induit comprend, considéré dans la direction tangentielle, un agencement régulier de cordes ( 9 ).

10. Rotor suivant la revendication 9, **caractérisé en ce que** les cordes ( 9 ) sont voisines immédiatement les unes des autres.

11. Rotor suivant la revendication 9, **caractérisé en ce qu'**un segment ( 10 ) en forme d'arc se trouve respectivement entre les cordes ( 9 ).

12. Rotor suivant l'une des revendications précédentes, **caractérisé en ce que** le flasque ( 5, 5' ) d'extrémité d'induit est monté sur l'arbre ( 1 ) du rotor sans possibilité de tourner par rapport au paquet ( 3 ) de tôles rotoriques, même sans le bandage ( 6 ).

13. Rotor suivant la revendication 12, **caractérisé en ce que** le flasque ( 5 ) d'extrémité d'induit est rétreint ou emmanché sur l'arbre ( 1 ) du rotor.

14. Rotor suivant la revendication 12 ou 13, **caractérisé en ce que** le flasque ( 5 ) d'extrémité d'induit est immobilisé sans possibilité de torsion sur le paquet ( 3 ) de tôles rotoriques par des éléments ( 17, 19 ) d'immobilisation s'étendant axialement et disposés de manière excentrée radialement.

15. Rotor suivant la revendication 14, **caractérisé en ce que** les éléments ( 17 ) d'immobilisation sont constitués sous la forme d'éclisses ( 17 ) disposées sur le flasque ( 5, 5' ) d'extrémité d'induit sur son côté tourné vers le paquet ( 3 ) de tôles rotoriques, éclisses qui pénètrent dans des évidements ( 18 ) correspondants du paquet ( 3 ) de tôles rotoriques.

16. Rotor suivant la revendication 14, **caractérisé en ce que** les éléments ( 19 ) d'immobilisation sont constitués sous la forme d'axes ( 19 ) axiaux, qui passent dans des évidements ( 20, 21 ) correspondants entre eux du paquet ( 3 ) de tôles rotoriques et du flasque ( 3 ) d'extrémité d'induit.

17. Rotor suivant l'une des revendications précédentes, **caractérisé en ce que** le flasque ( 5, 5' ) d'extrémité d'induit est en un matériau amagnétique.

18. Rotor suivant la revendication 17, **caractérisé en ce que** le flasque ( 5, 5' ) d'extrémité d'induit est en un matériau isolant du point de vue électrique.

19. Rotor suivant la revendication 17, **caractérisé en ce que** le flasque ( 5, 5' ) d'extrémité d'induit est en un matériau conducteur de l'électricité.

20. Rotor suivant la revendication 17, **caractérisé en ce que** le flasque ( 5, 5' ) d'extrémité d'induit est constitué sous la forme d'une pièce estampée à emboutissage profond.
